# EUROPÄISCHE PATENTSCHRIFT

(11) **EP 1 769 595 B1**
(45) Veröffentlichungstag und Bekanntmachung des Hinweises auf die Patenterteilung: **08.08.2012**
(21) Anmeldenummer: 05755349.7
(22) Anmeldetag: 30.06.2005
(51) Int. Cl.: H04B 10/10

(54) **VERFAHREN ZUM ÜBERMITTELN VON INFORMATIONEN ZWISCHEN PERSONEN**
METHOD FOR TRANSMITTING INFORMATION BETWEEN PERSONS
PROCEDE POUR ECHANGER DES INFORMATIONS ENTRE DES PERSONNES

(30) Priorität: 15.07.2004 DE 102004034347
(43) Veröffentlichungstag der Anmeldung: 04.04.2007
(73) Patentinhaber: Lamprecht, Jürgen, 45133 Essen (DE)
(72) Erfinder: Lamprecht, Jürgen, 45133 Essen (DE)
(74) Vertreter: Cohausz & Florack
(86) Internationale Anmeldenummer: PCT/EP2005/007044
(87) Internationale Veröffentlichungsnummer: WO 2006/007949

(56) Entgegenhaltungen:
- US-A1- 2002 054 411
- US-A1- 2004 114 940

## Beschreibung

Die Erfindung betrifft ein Verfahren zum Übermitteln von Informationen zwischen in Sichtweite befindlichen Personen, die jeweils aufeinander abstimmbare, kombinierte Sende- und Empfangsgeräte mit sich führen.

Im täglichen Leben gibt es bei der Begegnung von Personen Situationen, in denen der direkte und/oder vertrauliche Austausch von Informationen, wie Visitenkarten, Adressen, persönliche Bilder etc. aus räumlichen, zeitlichen oder psychologischen Gründen schwierig oder sogar unmöglich ist. Beispiele für eine räumliche Barriere, die die direkte Kontaktaufnahme verhindern, kann eine Veranstaltung mit fester Sitzplatzanordnung oder ein vorbeifahrendes Fahrzeug sein, in dem sich die Person befindet. Eine psychologische Barriere kann sein, dass einer zu schüchtern ist, um die Person, die einen interessiert, anzusprechen. In solchen Situationen, von denen nur einige beispielhaft geschildert sind, empfindet man es als Nachteil, subjektiv oder objektiv daran gehindert zu sein, näheren Kontakt aufzunehmen. Hilfreich wäre hier ein technisches Gerät, das analog zum natürlichen Blickkontakt Informationen wie Blick-Richtung, -Entfernung, -Haltedauer, -Wiederholung und/oder andere nutzt, um gegenseitiges Interesse zu signalisieren und zu empfangen, bevor eine schrittweise Entscheidung zu weiteren Interaktionen getroffen wird.

Aus der US 2002/0054411 A1 ist ein Verfahren zum gegenseitigen Ausrichten zweier Sende- und Empfangsgeräte eines optischen Netzwerkes bekannt. In diesem Verfahren senden die Sende- und Empfangsgeräte unabhängig voneinander ein Lichtsignal mit einem festgelegten Abtastmuster aus und übertragen wechselseitig ihre Positionsdaten. Nach Empfang des Lichtsignals des jeweils anderen Sende- und Empfangsgerätes werden die dort kodierten Positionsdaten in einem zurückgesandten Lichtsignal als Bestätigung wiederholt.

Vor diesem Hintergrund liegt der Erfindung die Aufgabe zugrunde, ein Verfahren zu entwickeln, das erlaubt, dass einander interessierende Personen miteinander Kontakt aufnehmen und einseitig oder wechselseitig Informationen übermitteln.

Diese Aufgabe wird bei einem Verfahren der eingangs genannten Art durch folgende Schritte gelöst:
a) eine erste Person sendet mit ihrem auf Senden geschalteten Gerät mit einer eingestellten Richtcharakteristik ein Erkennungssignal aus.
b) eine andere Person, die mit ihrem auf Empfangen geschalteten Gerät dieses Erkennungssignal empfängt, sendet mit ihrem Gerät ebenfalls mit eingestellter Richtcharakteristik ein Antwortsignal aus.
c) Die erste Person, die mit ihrem auf Empfangen geschalteten Gerät dieses Antwortsignal empfängt, ermittelt mit ihrem Gerät mit enger eingestellter Richtcharakteristik die Richtung, aus der das Antwortsignal kommt.
d) Abhängig von diesem Ermittlungsergebnis sendet die erste Person mit ihrem Gerät nur in die ermittelte Richtung ein neues Erkennungssignal aus.
e) Bei Empfang eines Antwortsignals auf dieses neue Erkennungssignal sind die beiden Geräte zur Übermittlung von Informationen koppelbar.

Ein solches Verfahren erlaubt es, zunächst anonym zu ermitteln, ob es in Sichtweite Personen gibt, die grundsätzlich daran interessiert sind, mit anderen Personen Kontakt aufzunehmen. Es erlaubt es aber auch, gezielt eine interessierende Person direkt auszuwählen. Es versteht sich, dass für diese erste Kontaktaufnahme die beiderseitigen Geräte zumindest so weit aufeinander abgestimmt sein müssen, dass sie die gesendeten Signale empfangen können. Ist erst einmal die erste Kontaktaufnahme hergestellt, dann kann die erste Person mit ihrem Gerät mit enger eingestellter Richtcharakteristik die Richtung orten, aus der das Antwortsignal kommt. Da sich diese zweite Person in Sichtweite befindet, kann die erste Person in der Regel auch erkennen, welche Person das Antwortsignal gesendet hat. Jetzt kann die erste Person entscheiden, ob sie mit dieser Person weiter in Kontakt bleiben will. Möchte sie weiter in Kontakt bleiben, dann bleibt sie mit ihrem Gerät auf Sendung. Umgekehrt kann die angepeilte Person auch entscheiden, ob sie mit der ersten Person in Kontakt bleiben will. Auch sie kann wie die erste Person an ihrem Gerät die Richtcharakteristik enger einstellen und anpeilen, aus welcher Richtung das neue Erkennungssignal kommt. Sie kann dann entscheiden, ob sie den Kontakt aufrechterhalten will. Wenn ja, bleiben die Geräte auf Sendung und Empfang geschaltet und koppeln einander, um anschließend Informationen, wie Adressen, Telefonnummern oder persönliche Bilder zu übermitteln. Nach diesem Austausch von Informationen ist die Hemmschwelle der ersten Kontaktaufnahme überwunden, und beide Personen können entscheiden, wie sie den weiteren Kontakt gestalten wollen. Soweit sich die Personen ohne körperliche Barrieren in Sichtweite befinden, können sie aufeinander zugehen und miteinander reden. Sofern eine körperliche Barriere vorhanden ist, die eine unmittelbare Begegnung ausschließt, können sie die übermittelten Informationen, z.B. Adressen oder Telefonnummern, ausnutzen, um sich später persönlich zu begegnen.

Um auszuschließen, dass nicht Dritte, die sich in unmittelbarer Nähe der beiden Personen befinden, die vertrauliche Informationen austauschen, auch diese Informationen empfangen, kann vor dem Austausch ein Schlüsselcode ausgetauscht werden. Dann werden die Informationen verschlüsselt nur zwischen den beiden miteinander gekoppelten Geräten übermittelt.

Da das erfindungsgemäße Verfahren zwischen Personen in Sichtweite ausgeführt wird, ist das Erkennungs- und Antwortsignal vorzugsweise ein Lichtsignal. Besonders gut geeignet zur Fokussierung sind z.B. der Sklera des Auges nachempfundene Lichtsignale oder Lichtsignale aus einem runden Kern mit im Achsenkreuz angeordneten Messpunkten. Das empfangene Lichtsignal kann dann leicht mindestens auf eine für den Übertragungsweg und/oder die Übertragungsrichtung charakteristische Größe/Form überprüft werden.

Im folgenden wird die Erfindung anhand einer ein Ausführungsbeispiel darstellenden Zeichnung näher erläutert. Im einzelnen zeigen:
- Fig. 1: eine schematische Anordnung von einem Sende- und Empfangsgerät und drei ihm zugeordneten, gleichartigen Empfangs- und Sendegeräten,
- Fig. 2: zwei mögliche Formen für gesendete Erkennungs-und Antwortsignale,
- Fig. 3: ein in gerader Ausrichtung empfangenes Erkennungs- und Antwortsignal,
- Fig. 4: ein in schiefer Ausrichtung empfangenes Erkennungs- und Antwortsignal, und
- Fig. 5: ein Sende- und Empfangsgerät nach Fig. 1 mit einer mechanischen Fokussierung.

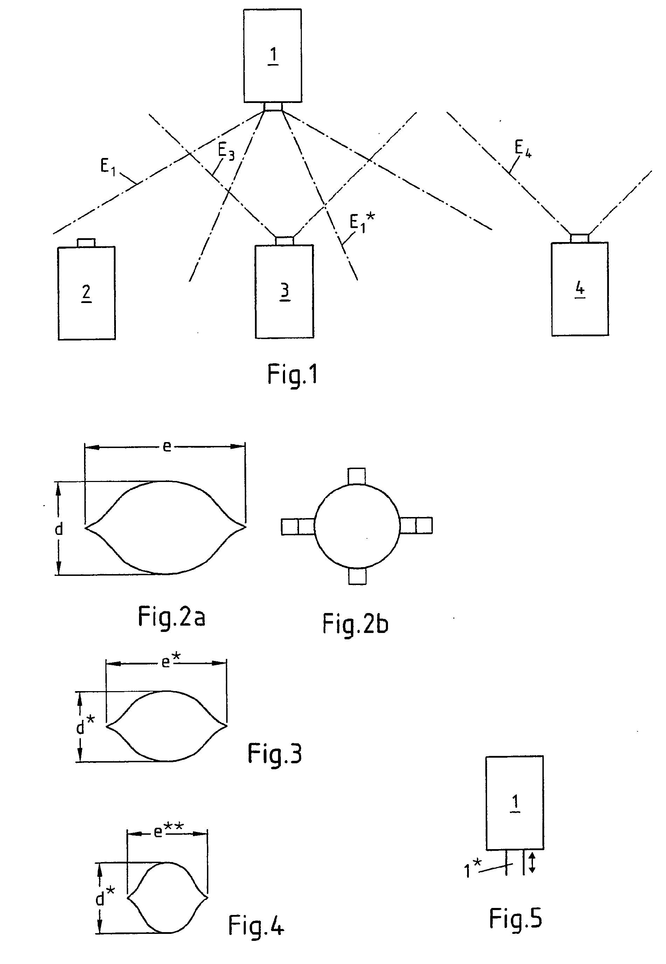

Die in Fig. 1 schematisch dargestellten, kombinierten Sende- und Empfangsgeräte 1 bis 4 sind einzelnen Personen zugeordnet, die sich in Sichtweite befinden. Von den in der Zeichnung dargestellten Geräten 1 bis 4 sind die Geräte 1, 3 und 4 auf Senden und Empfangen geschaltet. Das Gerät 2 ist ausgeschaltet. Im Sendebereich des Erkennungssignals E₁ des Gerätes 1 liegen die Geräte 2 und 3, während das Gerät 4 außerhalb des gesendeten Erkennungssignals E₁ liegt. Die beiden im Sendebereich des Signals E₁ liegenden Geräte 3 und 4 senden ebenfalls Erkennungssignale E3, E4 aus, doch wird nur das Erkennungssignal E3 vom Gerät 1 empfangen, weil das Gerät 1 außerhalb des Erkennungssignals E4 vom Gerät 4 liegt. Das Erkennungssignal E3 kann auch als Antwortsignal interpretiert werden. Um nun zu ermitteln, aus welcher Richtung das Antwortsignal E3 kommt, stellt der Träger des Gerätes E₁ die Richtcharakteristik seines Gerätes 1 enger. Vorzugsweise geschieht dies elektronisch, doch kann dazu auch eine Ausziehblende 1* verwendet werden, wie in Fig. 5 dargestellt ist. Hat er die Richtcharakteristik des Signals E₁* eingestellt, dann stellt er fest, dass das Gerät 3 das Gerät ist, dessen Signal E3 das Gerät 1 empfangen hat. Hätte er dagegen sein Gerät auf das Gerät 2 gerichtet, dann hätte er festgestellt, dass von dort kein Signal kommt. Auf das Gerät 4 richtet er sein Gerät 1 erst gar nicht, weil schon bei der breiten Richtcharakteristik mit dem Erkennungssignal E₁ vom Gerät E4 kein Signal empfangen wurde.

Der Träger des Gerätes 3 kann nun seinerseits die Richtcharakteristik seines Gerätes 3 einengen und sie auf das Gerät 1 richten. Er hat aber auch die Möglichkeit, das Gerät 1 auszublenden.

Sind beide Geräte 1, 3 mit enger Richtcharakteristik aufeinander gerichtet und empfangen so dauernd Erkennungssignale und Antwortsignale oder auch wiederholend, dann können die Geräte 1, 3 zeitverzögert miteinander zum Austausch von Informationen welcher Art auch immer miteinander gekoppelt werden. Es können Sprachinformationen, aber auch Bilder übertragen werden. Zuvor sollten die Geräte 1, 3 aber einen eindeutigen Verschlüsselungscode austauschen, damit nur diese beiden Geräte 1, 3 an der weiteren Kommunikation teilnehmen können. Die Übertragungsart kann nach Koppelung auch derart geändert werden, dass für den weiteren Informationsaustausch nicht länger Sichtkontakt bestehen muss.

Um bei einer Ortsveränderung eines oder beider Geräte die Verbindung aufrechtzuerhalten, sollten die beiden Geräte mit einer automatischen Nachführung ausgerüstet sein.

Findet dagegen bei enger eingestellter Richtcharakteristik keine dauernde oder sich wiederholende wechselseitige Übertragung von Erkennungssignal und Antwortsignal statt, weil eine der beteiligten Personen an einer Kontaktaufnahme nicht weiter interessiert ist, dann weiß die andere noch interessierte Person, dass sie bei der betroffenen anderen Person keine Chance hat und kann dann jeden weiteren Kontaktversuch beenden.

Die Größe und Form des empfangenen Signals ermöglicht eine Interpretation über die Entfernung und Ausrichtung des sendenden Gerätes zum empfangenden Gerät. So wird das vom Gerät 1 gesendete Signal E₁ mit den Achsabständen e und d in der Form a der Fig. 2 vom zum Gerät 1 gerade ausgerichteten Gerät 3 unverzerrt aber verkleinert, d.h. mit prozentual gleichmäßig verkürzten Achsen e* = p x e, bzw. d* = p x d, empfangen, wie in Fig. 3 dargestellt ist, während dasselbe gesendete Signal E₁ vom Gerät 2 verzerrt und verkleinert wird, d.h. e** = q x e bzw. d* = pq x d, wobei q < p ist. Dabei ist dann p ein Maß für die Entfernung und q ein Maß für die schiefe Ausrichtung.

## Patentansprüche

1. Verfahren zum Übermitteln von Informationen zwischen in Sichtweite befindlichen Personen, die jeweils aufeinander abstimmbare, kombinierte Sende- und Empfangsgeräte mit sich führen, umfassend
folgende Schritte:
a) Eine erste Person sendet mit ihrem auf Senden geschalteten Gerät (1) mit einer eingestellten Richtcharakteristik ein Erkennungssignal (E1) aus;
b) Eine andere Person, die mit ihrem auf Empfangen geschalteten Gerät (3) dieses Erkennungssignal (E1) empfängt, sendet mit ihrem Gerät (3) ebenfalls mit eingestellter Richtcharakteristik ein Antwortsignal (E3) aus;
**dadurch gekennzeichnet, daß** das Verfahren die weiteren Schritte umfasst:
c) Die erste Person, die mit ihrem auf Empfangen geschalteten Gerät (1) dieses Antwortsignal (E3) empfängt, ermittelt mit ihrem Gerät (1) mit enger eingestellter Richtcharakteristik die Richtung, aus der das eine Antwortsignal (E3) kommt, wobei die enger eingestellte Richtcharakteristik enger als die während des Sendens des Erkennungssignals (E1) eingestellte Richtcharakteristik ist;
d) Abhängig von diesem Ermittlungsergebnis sendet die erste Person mit ihrem Gerät (1) nur in die ermittelte Richtung ein neues Erkennungssignal aus; und
e) Bei Empfang eines Antwortsignals auf dieses neue Erkennungssignal sind die beiden Geräte (1, 3) zur Übermittlung von Informationen koppelbar.

2. Verfahren nach Anspruch 1,
**dadurch gekennzeichnet, da**ß die Informationen verschlüsselt nur zwischen den beiden miteinander gekoppelten Geräten (1, 3) übermittelt werden.

3. Verfahren nach Anspruch 1,
**dadurch gekennzeichnet, da**ß das Erkennungs- und Antwortsignal (E1, E3) ein Lichtsignal ist.

4. Verfahren nach einem der Ansprüche 1 bis 3,
**dadurch gekennzeichnet, da**ß die automatische Kopplung der Geräte (1, 3) zeitverzögert nach andauerndem und/oder sich wiederholendem Austausch von neuem Erkennungssignal und Antwortsignal erfolgt.

5. Verfahren nach einem der Ansprüche 1 bis 4,
**dadurch gekennzeichnet, da**ß die beiden miteinander gekoppelten Geräte (1, 3) bei einer Ortsveränderung für die Übertragung von Informationen mit ihrer Richtung automatisch nachgeführt werden.

6. Verfahren nach einem der Ansprüche 1 bis 5,
**dadurch gekennzeichnet, da**ß die Geräte für die Aufnahme, Wiedergabe und Übertragung von Bildern eingerichtet sind.

## Claims

1. Method for transmitting information between individuals in visual range, who carry with them combined send and receiving apparatuses respectively tunable to each other, comprising the following steps:
a) a first individual sends out an identification signal (E1) with a set directional characteristic using their apparatus (1) which is switched to send;
b) another individual, who receives this identification signal (E1) using their apparatus (3) which is switched to receive, sends a response signal likewise with a set directional characteristic (E3) using their device (3);
**characterised in that** the method comprises the further steps:
c) the first individual, who receives this response signal (E3) using their apparatus (1) switched to receive, determines using their apparatus (1) with narrow set directional characteristic the direction from which the response signal comes wherein the narrower set directional characteristic is narrower than the directional characteristic set during the sending of the identification signal (E1);
d) depending on this result of determination the first individual only sends out a new identification signal using their apparatus (1) in the direction determined; and
e) upon receiving a response signal on this new identification signal the two apparatuses (1, 3) are connected to transmit information.

2. Method according to Claim 1, **characterised in that** the information is transmitted encrypted only between the two devices connected to each other (1, 3).

3. Method according to Claim 1, **characterised in that** the identification and response signal (E1, E3) is a light signal.

4. Method according to any one of Claims 1 to 3, **characterised in that** the automatic connection of the apparatuses (1, 3) takes places in a time delayed manner following continuous and/or repetitive exchange of the new identification signal and response signal.

5. Method according to any one of Claims 1 to 4, **characterised in that** the two apparatuses (1, 3) connected to each other are automatically updated with their direction for the transmission of information in the case of a change in location.

6. Method according to any one of Claims 1 to 5, **characterised in that** the apparatuses are configured for the receipt, forwarding and transmission of images.

## Revendications

1. Procédé pour transmettre des informations entre des personnes se trouvant à une distance de visibilité, qui portent sur eux à chaque fois des appareils d'émission et de réception pouvant être coordonnés les uns aux autres et combinés, comprenant les étapes suivantes :
a) une première personne émet un signal de reconnaissance (E1) avec son appareil (1) commuté sur émission avec une caractéristique directive réglée ;
b) une autre personne, qui reçoit ce signal de reconnaissance (E1) avec son appareil (3) commuté sur réception, émet un signal de réponse (E3) avec son appareil (3) également avec une caractéristique directive réglée ;
**caractérisé en ce que** le procédé comprend les autres étapes suivantes :
c) la première personne, qui reçoit ce signal de réponse (E3) avec son appareil (1) commuté sur réception, détermine avec son appareil (1) avec une caractéristique directive réglée de façon plus resserrée la direction de laquelle l'un des signaux de réponse (E3) arrive, la caractéristique directive réglée de façon plus resserrée étant plus resserrée que la caractéristique directive réglée pendant l'émission du signal de reconnaissance (E1)
d) en fonction de ce résultat de calcul, la première personne envoie avec son appareil (1) un nouveau signal de reconnaissance uniquement dans la direction déterminée ; et
e) en cas de réception d'un signal de réponse à ce nouveau signal de reconnaissance, les deux appareils (1, 3) peuvent être couplés pour la transmission d'informations.

2. Procédé selon la revendication 1,
**caractérisé en ce que**
les informations sont transmises de façon codée uniquement entre les deux appareils (1, 3) couplés les uns avec les autres.

3. Procédé selon la revendication 1,
**caractérisé en ce que**
le signal de reconnaissance et de réponse (E1, E3) est un signal lumineux.

4. Procédé selon l'une des revendications 1 à 3,
**caractérisé en ce que**
l'accouplement automatique des appareils (1, 3) s'effectue de façon temporisée après un remplacement permanent et/ou récurrent du nouveau signal de reconnaissance et du nouveau signal de réponse.

5. Procédé selon l'une des revendications 1 à 4,
**caractérisé en ce que**
les deux appareils (1, 3) couplés les uns avec les autres sont asservis automatiquement lors d'un changement de lieu pour la transmission d'informations avec leur direction.

6. Procédé selon l'une des revendications 1 à 5,
**caractérisé en ce que**
les appareils sont équipés pour l'enregistrement, la restitution et la transmission de photos.
